(19) Europäisches Patentamt
European Patent Office
Office européen des brevets

(11) EP 4 318 097 A1

(12) # EUROPEAN PATENT APPLICATION
published in accordance with Art. 153(4) EPC

(43) Date of publication:
**07.02.2024 Bulletin 2024/06**

(21) Application number: **22781243.5**

(22) Date of filing: **31.03.2022**

(51) International Patent Classification (IPC):
***G02C 7/02*** *(2006.01)* ***C08G 18/40*** *(2006.01)*
***G02B 1/10*** *(2015.01)* ***G02B 1/14*** *(2015.01)*
***G02C 7/00*** *(2006.01)*

(52) Cooperative Patent Classification (CPC):
**C08G 18/40; G02B 1/10; G02B 1/14; G02C 7/00; G02C 7/02**

(86) International application number:
**PCT/JP2022/016561**

(87) International publication number:
**WO 2022/211033 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2021 JP 2021061638**

(71) Applicant: **Hoya Lens Thailand Ltd.**
**Pathumthani 12130 (TH)**

(72) Inventors:
- **NOZAWA, Kichinosuke**
**Tokyo 160-8347 (JP)**
- **KOJIMA, Kenji**
**Tokyo 160-8347 (JP)**

(74) Representative: **Kraus & Lederer Patentanwälte PartGmbB**
**Thomas-Wimmer-Ring 15**
**80539 München (DE)**

(54) **METHOD FOR PRODUCING SPECTACLE LENS**

(57) An embodiment of the present disclosure is a method for producing a spectacle lens, including applying a coating liquid containing a water-absorbent antifogging layer composition to at least one surface of a substrate by a spin coating method to form a water-absorbent antifogging layer.

*FIG. 1*

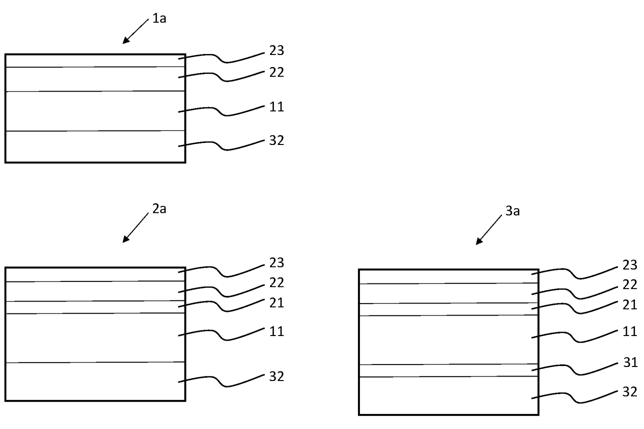


EP 4 318 097 A1

## Description

Technical Field

The present disclosure relates to a method for producing a spectacle lens.

Background Art

As a technique for preventing "fogging" of a lens such as spectacles, it is common to apply a surfactant to the surface of the lens to form an antifogging layer. In this case, the persistence of the effect is extremely short, and the effect cannot be sustained unless the surfactant is applied again in a few days. When the dirt of the optical article is wiped with water or the like, the antifogging layer of the surfactant disappears together with the dirt, and the antifogging effect is lost. In addition, the antifogging layer formed by applying a surfactant to the surface of the lens is insufficient to prevent "fogging" under a high humidity environment, and there is room for improvement. Therefore, recently, a technique for applying a water-absorbent substance on an article substrate instead of a surfactant, to form an antifogging layer having water absorption performance and to thereby prevent "fogging" has been studied (for example, Patent Literatures 1 and 2).

Here, as a method for forming various functional layers on a spectacle lens, for example, an air spray method, an airless spray method, an electrostatic coating method, a roll coater method, a flow coater method, a spin coating method, a dip method, and the like are known. On the other hand, the formation of the antifogging layer is mainly performed by a dip method in which the lens is immersed in an immersion liquid containing an antifogging layer composition from the viewpoint of productivity.

Citation List

Patent Literature

Patent Literature 1: JP 2000-75104 A
Patent Literature 2: WO 2013/005710 A

Summary of Invention

Technical Problem

However, when a thick antifogging layer is formed to impart various functions, a liquid pool tends to easily generated at the peripheral portion of the spectacle lens in the dip method. Even when the viscosity of the coating liquid is high, the liquid pool tends to be easily generated in the dipping method. When the liquid pool is generated, the antifogging layer may not be uniformly formed, resulting in a product defect. In addition, it may be required to form an antifogging layer having different performance or thickness on each of one surface and the other surface of the spectacle lens. As described above, if the method for forming the antifogging layer is the dip method, it may be difficult to form such antifogging layers by the dip method.

In view of the above problems, an object of an embodiment of the present disclosure is to provide a method for producing a spectacle lens capable of forming the same or different antifogging layers on both surfaces of a substrate with almost no liquid pool.

Solution to Problem

The embodiment of the present disclosure relates to the following [1] to [13].

[1] A method for producing a spectacle lens, including applying a coating liquid containing a water-absorbent antifogging layer composition to at least one surface of a substrate by a spin coating method to form a water-absorbent antifogging layer.
[2] The method for producing a spectacle lens according to [1], wherein the water-absorbent antifogging layer composition contains a constituent unit derived from acrylamide.
[3] The method for producing a spectacle lens according to [1] or [2], wherein an antifogging layer is formed on the other surface of the substrate by a spin coating method.

[4] The method for producing a spectacle lens according to [3], wherein a thickness of the water-absorbent antifogging layer on the one surface and a thickness of the antifogging layer on the other surface are the same or different.
[5] The method for producing a spectacle lens according to [3] or [4], wherein the antifogging layer on the other surface is a water-absorbent antifogging layer or a hydrophilic antifogging layer.
[6] The method for producing a spectacle lens according to any one of [1] to [5], wherein a coating liquid containing the water-absorbent antifogging layer composition is applied to the other surface of the substrate by a spin coating method to form a water-absorbent antifogging layer.
[7] The method for producing a spectacle lens according to any one of [1] to [6], wherein the water-absorbent antifogging layer is directly formed on at least one surface of the substrate.
[8] The method for producing a spectacle lens according to any one of [1] to [5], wherein the following steps 1 to 3 are sequentially performed:

Step 1: applying a coating liquid containing the water-absorbent antifogging layer composition to one surface of the substrate by a spin coating method to form a water-absorbent antifogging layer;
Step 2: forming an antireflection layer on the other surface of the substrate; and
Step 3: forming a hydrophilic antifogging layer on the other surface having the antireflection layer obtained in the step 2.

[9] The method for producing a spectacle lens according to [8], wherein a hard coat layer is formed on at least the other surface of the substrate before performing the step 1 or the step 2.
[10] The method for producing a spectacle lens according to any one of [1] to [9], wherein one surface of the substrate is a concave surface, and the other surface of the substrate is a convex surface.
[11] The method for producing a spectacle lens according to any one of [1] to [10], wherein the water-absorbent antifogging layer on at least the one surface of the substrate is an outermost layer.
[12] The method for producing a spectacle lens according to any one of [1] to [11], wherein the water-absorbent antifogging layer on at least the one surface of the substrate is a single layer.
[13] The method for producing a spectacle lens according to any one of [1] to [12], wherein the water-absorbent antifogging layer composition contains the following components (A) to (C):

Component (A): a (meth)acrylic resin (A) having a constituent unit derived from a monomer (a-1) represented by the following general formula (1), a constituent unit derived from a monomer (a-2) represented by the following general formula (2), a constituent unit derived from a hydroxyalkyl (meth)acrylate (a-3), and a constituent unit derived from a monomer (a-4) represented by the following general formula (3);
Component (B): a polyol compound (B); and
Component (C): a polyfunctional isocyanate compound (C),

[Chemical Formula 1]

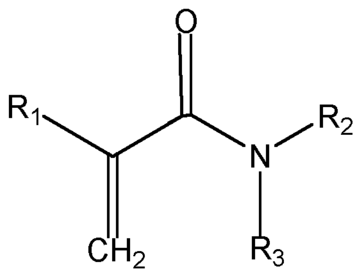

(1)

wherein $R_1$ is a hydrogen atom or a methyl group, $R_2$ and $R_3$ are each independently a hydrogen atom or a linear or branched alkyl group having 1 to 3 carbon atoms, and $R_2$ and $R_3$ may be the same or different,

[Chemical Formula 2]

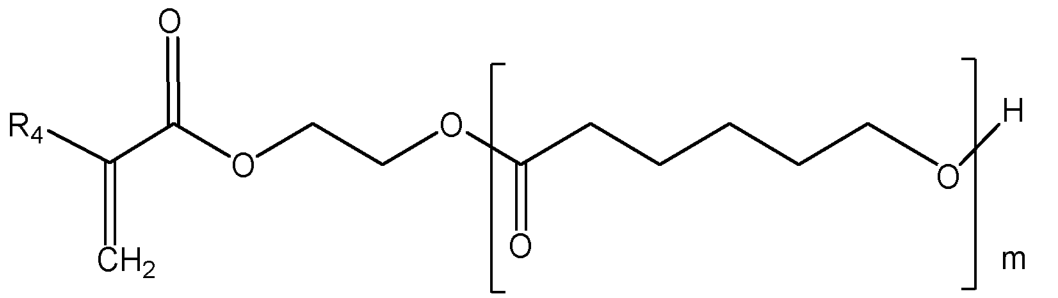

(2)

wherein $R_4$ is a hydrogen atom or a methyl group, and m is an integer of 1 to 5, and

[Chemical Formula 3]

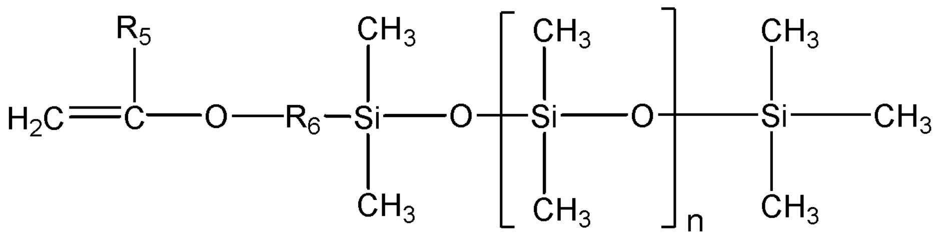

(3)

wherein $R_5$ is a hydrogen atom or a methyl group, $R_6$ is a divalent organic group, and n is 0 or an integer of 1 or more.

Advantageous Effects of Invention

According to an embodiment of the present disclosure, it is possible to provide a method for producing a spectacle lens capable of forming the same or different antifogging layers on both surfaces of a substrate with almost no liquid pool.

Brief Description of Drawings

Fig. 1 is a schematic cross-sectional view of a spectacle lens produced according to an embodiment of the present disclosure.
Fig. 2 is a schematic cross-sectional view of a spectacle lens produced according to an embodiment of the present disclosure.
Fig. 3 is a schematic cross-sectional view of a spectacle lens for reference.

Description of Embodiments

Hereinafter, embodiments and examples of the present disclosure will be described. The same or corresponding parts are denoted by the same reference numerals, and the description thereof may not be repeated. In the embodiments and examples described below, when referring to the number, amount, and the like, the scope of the present disclosure is not necessarily limited to the number, amount, and the like unless otherwise specified. In the following embodiments, each component is not necessarily essential to the embodiments and examples of the present disclosure unless otherwise specified.

In the notation of the group (atomic group) in the present specification, the notation that does not indicate whether it is substituted or unsubstituted includes both groups having no substituent and groups having a substituent. For example, the "alkyl group" includes an alkyl group having no substituent (unsubstituted alkyl group) and an alkyl group having a substituent (substituted alkyl group).

The notation "(meth)acryl" in the present specification represents a concept including both acryl and methacryl. The same applies to similar notations such as " (meth)acrylate".

In the present specification, the constituent unit derived from the monomer (a-1) may be referred to as a "constituent unit (a-1)", the constituent unit derived from the monomer (a-2) as a "constituent unit (a-2)", the constituent unit derived from the monomer (a-3) as a "constituent unit (a-3)", and the constituent unit derived from the monomer (a-4) as a "constituent unit (a-4)".

The "solid content" in the composition means the content of components other than a solvent.

The "carbon number" for a group having a substituent means the number of carbon atoms in a portion excluding the substituent.

In the method for producing a spectacle lens according to the present embodiment, a coating liquid containing a water-absorbent antifogging layer composition is applied to at least one surface of a substrate by a spin coating method to form a water-absorbent antifogging layer.

In the method for producing a spectacle lens according to the present embodiment, a coating liquid containing a water-absorbent antifogging layer composition is applied by a spin coating method to form a water-absorbent antifogging layer. Therefore, the same or different water-absorbent antifogging layers can be formed on both surfaces of the substrate with almost no liquid pool. In addition, in the method for producing a spectacle lens according to the present embodiment, a coating liquid containing a water-absorbent antifogging layer composition is applied by a spin coating method. Therefore, even when a relatively thick water-absorbent antifogging layer is formed, and even when the viscosity of the coating liquid containing a water-absorbent antifogging layer composition is high, it can be expected that there is almost no liquid pool. The same or different antifogging layers or the same or different layer structures can also be formed on both surfaces of the substrate.

Further, the spectacle lens is required to be changed in specification for each wearer. For example, the curvature of the spectacle lens varies depending on the power. In addition, the spin coating method often requires a smaller amount of coating liquid than the dip method. In the method for producing a spectacle lens according to the present embodiment, the antifogging performance can be individually imparted according to the curvature of the lens, and it is therefore expected that the method can efficiently support small volume production.

Therefore, according to the method for producing a spectacle lens according to the present embodiment, it can be expected to efficiently produce a spectacle lens which includes a water-absorbent antifogging layer having improved antifogging performance, and to which desired functions are favorably imparted.

[Substrate]

In the present embodiment, the substrate is a lens substrate constituting a spectacle lens.

As the substrate, a resin made of various types of raw materials can be used.

Examples of the resin constituting the substrate include a polycarbonate resin, a urethane urea resin, a (thio)urethane resin, a polysulfide resin, a polyamide resin, a polyester resin, an acrylic allyl resin, and an allyl carbonate resin. The (thio)urethane resin means at least one selected from a thiourethane resin and a urethane resin. Among them, a (thio)urethane resin and a polysulfide resin are preferable.

In addition, the substrate used for the spectacle lens of the present embodiment is preferably a plastic lens substrate having a refractive index of 1.50 or more, and more preferably a plastic lens substrate having a refractive index of 1.60 or more.

Preferable commercially available products of the plastic lens substrate include an allyl carbonate-based plastic lens "HILUX 1.50" (manufactured by HOYA Corporation, refractive index 1.50), a thiourethane-based plastic lens "MERIA" (manufactured by HOYA Corporation, refractive index 1.60), a thiourethane-based plastic lens "EYAS" (manufactured by HOYA Corporation, refractive index 1.60), a thiourethane-based plastic lens "EYNOA" (manufactured by HOYA Corporation, refractive index 1.67), a polysulfide-based plastic lens "EYRY" (manufactured by HOYA Corporation, refractive index 1.70), and a polysulfide-based plastic lens "EYVIA" (manufactured by HOYA Corporation, refractive index 1.74).

The thickness and diameter of the substrate are not particularly limited. The thickness is usually about 1 to 30 mm, and the diameter is usually about 50 to 100 mm.

The substrate may be either a finish lens or a semi-finish lens.

The surface shape of the substrate is not particularly limited, and may be any of a flat surface, a convex surface, a concave surface, or the like.

The spectacle lens of the present embodiment may be any of a single focal lens, a multifocal lens, a progressive addition lens, or the like. In a progressive addition lens, usually, a near vision region (near portion) and a progressive region (intermediate region) are included in a lower region, a distance vision region (distance portion) is included in an upper region.

[Spin coating method]

In the present embodiment, a coating liquid containing a water-absorbent antifogging layer composition is applied to at least one surface of a substrate by a spin coating method to form a water-absorbent antifogging layer.

Hereinafter, a spin coating method for forming the water-absorbent antifogging layer will be described.

The spin coating can be performed, for example, by disposing a substrate on a spin coater.

The substrate may be rotated, for example, about the geometric center of the substrate.

The coating liquid may be supplied, for example, to the geometric center of the rotating substrate. The coating liquid may also be applied by horizontally moving the supply point of the coating liquid on a straight line connecting the geometric center and the peripheral portion of the substrate with respect to the rotating substrate so that the supply point of the coating liquid draws a spiral trajectory on the substrate.

The supply amount of the coating liquid can be appropriately determined according to a desired thickness. The supply amount of the coating liquid is usually about 1 to 10 ml and preferably 2 to 5 ml.

As a first stage, at the start of supplying the coating liquid (at the time of liquid discharge), the substrate is rotated at a low rotation speed so that the coating liquid to be supplied is not repelled on the substrate. The rotation speed in the first stage is preferably 200 to 600 rpm, more preferably 250 to 500 rpm, and still more preferably 285 to 450 rpm.

The holding time at the above rotation speed can be usually about 1 to 10 seconds, and preferably 2 to 6 seconds.

Next, as a second stage, after the start of supplying the coating liquid, the substrate is usually rotated by increasing the rotation speed to 600 rpm or more, in order to spread the coating liquid onto the application surface. The rotation speed in the second stage is preferably 700 to 1,500 rpm, more preferably 800 to 1,300 rpm, and still more preferably 900 to 1,200 rpm. Within the above numerical range, the coating liquid can be spun off well.

The holding time at the above rotation speed can be usually about 1 to 10 seconds, and preferably 1 to 6 seconds.

After the application, it is preferable to perform pre-firing usually at about 20 to 160°C, preferably 70 to 120°C, more preferably 75 to 110°C, and still more preferably 80 to 100°C.

The time for the pre-firing can be usually about 5 to 100 minutes, preferably 10 to 60 minutes, and more preferably 15 to 40 minutes.

After the pre-firing, the main firing is usually performed at a temperature equal to or higher than the temperature in the pre-firing. The temperature in the main firing is preferably 70 to 160°C, more preferably 85 to 140°C, and still more preferably 100 to 130°C.

The time for the main firing can be usually about 30 to 150 minutes, preferably 60 to 140 minutes, and more preferably 90 to 130 minutes. A water-absorbent antifogging layer is obtained by performing drying and curing by main firing, followed by cooling at normal temperature. The temperature and time for drying and curing may be appropriately adjusted in consideration of the type of solvent, the heat resistance of the substrate, and the like.

In the present embodiment, an antifogging layer can be further formed on the other surface of the substrate by a spin coating method, from the viewpoint of further improving the antifogging performance. The antifogging layer formed on the other surface is not particularly limited as long as the effects of the present disclosure are not impaired. The antifogging layer formed on the other surface may be, for example, a water-absorbent antifogging layer or a hydrophilic antifogging layer. At this time, the water-absorbent antifogging layer formed on the other surface may have the same composition as or a different composition from the water-absorbent antifogging layer formed on one surface.

In the present embodiment, the water-absorbent antifogging layer on one surface and the antifogging layer on the other surface can be formed so that both layers have the same or different thicknesses.

In the present specification, the phrase "the thickness of the layer is the same" includes not only a case where the numerical values of the thicknesses of the two layers are completely the same, but also includes a case where there is a numerical difference that is recognized as being substantially the same in the present technical field. Specifically, the term "substantially the same" means that the ratio of the difference in thickness represented by the following formula is usually about 10% or less, and preferably 5% or less.

$$\text{Ratio of difference in thickness (\%)} = [(a - b)/a] \times 100$$

In the above formula, a and b are the thicknesses of the layers, and a ≥ b.

When the substrate has a convex surface and a concave surface, the water-absorbent antifogging layer can be formed on both the convex surface and the concave surface. For example, when one surface of the substrate is a concave surface and the other surface of the substrate is a convex surface, the water-absorbent antifogging layer is formed at least on the concave surface side.

As described above, in the present embodiment, the same or different antifogging layers can be formed on both surfaces of the substrate according to a desired specification of the spectacle lens.

[Water-absorbent antifogging layer]

The water-absorbent antifogging layer can be formed by curing a coating liquid containing a water-absorbent antifogging layer composition. The water-absorbent antifogging layer is a layer that is formed on at least one surface of the substrate, and has water absorbency. Here, the term "water absorbency" means that the material exhibits a property of taking moisture therein. The term "water absorbency" specifically means that when a transparent substrate on which the water-absorbent antifogging layer is formed is stored at room temperature, and then the transparent substrate provided with the antifogging layer is placed at a position 35 mm away from the surface of hot water at 40°C, and exposed to vapor from the hot water for 15 seconds, there is no irregular reflection on the surface of the water-absorbent antifogging layer due to small water droplets, and there is no distortion due to condensation on an image viewed through the transparent substrate provided with the water-absorbent antifogging layer after the vapor is brought into contact with the transparent substrate.

The water-absorbent antifogging layer formed on at least one surface of the substrate is preferably provided as the outermost layer of the spectacle lens from the viewpoint of sufficiently exhibiting the antifogging performance. By using a water-absorbent antifogging layer composition containing components (A) to (C) described later, the water-absorbent antifogging layer can exhibit high durability even when located at the outermost layer of the spectacle lens.

The water-absorbent antifogging layer may be formed on only one surface of the substrate, or may be formed on both surfaces of the substrate. For example, the water-absorbent antifogging layer can also be formed by applying a coating liquid containing the water-absorbent antifogging layer composition to the other surface of the substrate by a spin coating method.

The water-absorbent antifogging layer may be formed as a single layer or as a multilayer on at least one surface of the substrate. The water-absorbent antifogging layer is preferably formed as a single layer from the viewpoint of productivity.

The water-absorbent antifogging layer may be formed directly on at least one surface of the substrate, from the viewpoint of antifogging durability.

The thickness of the water-absorbent antifogging layer is about 0.05 to 100 μm, but is not particularly limited. On the other hand, the thickness of the water-absorbent antifogging layer is preferably 0.1 um or more, more preferably 0.5 um or more, still more preferably 0.8 um or more, still even more preferably 1 um or more, and still even more preferably 5 um or more from the viewpoint of improving the antifogging performance and scratch resistance. The thickness of the water-absorbent antifogging layer is preferably 60 um or less, more preferably 50 um or less, still more preferably 40 um or less, still even more preferably 30 um or less, and still even more preferably 20 um or less from the viewpoint of improving the antifogging performance and forming a uniform layer.

When a thick antifogging layer is formed by a dip method, a liquid pool is likely to occur, which may cause a defect. However, in the present embodiment, even when the water-absorbent antifogging layer is thick, the water-absorbent antifogging layer can be formed without causing a liquid pool. Therefore, as the thickness of the water-absorbent antifogging layer increases, the effect of the present disclosure tends to be more remarkably exhibited.

Further, according to the method for producing a spectacle lens according to the present embodiment, when the water-absorbent antifogging layer is formed on one surface and the other surface of the substrate, the water-absorbent antifogging layer can be formed on each of the surfaces. Therefore, the thickness of the water-absorbent antifogging layer on one surface and the thickness of the water-absorbent antifogging layer on the other surface can be formed to be the same or different.

[Coating liquid containing water-absorbent antifogging layer composition]

<Water-absorbent antifogging layer composition>

The water-absorbent antifogging layer composition (hereinafter, also simply referred to as "antifogging layer composition") preferably contains a constituent unit derived from acrylamide. When the antifogging layer composition contains an amide group derived from acrylamide, the hydrophilicity of the water-absorbent antifogging layer increases. This improves the water absorption performance and thus improves the antifogging performance.

The antifogging layer composition preferably contains the following components (A) to (C) from the viewpoint of obtaining an antifogging layer excellent in antifogging performance:

Component (A): a (meth)acrylic resin (A) having a constituent unit derived from a monomer (a-1) represented by the following general formula (1), a constituent unit derived from a monomer (a-2) represented by the following

general formula (2), a constituent unit derived from a hydroxyalkyl (meth)acrylate (a-3), and a constituent unit derived from a monomer (a-4) represented by the following general formula (3);
Component (B): a polyol compound (B); and
Component (C): a polyfunctional isocyanate compound (C),

[Chemical Formula 4]

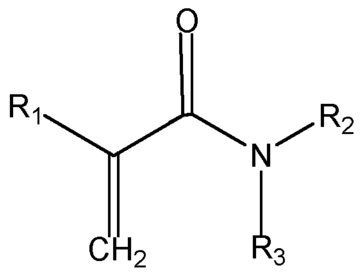
(1)

wherein $R_1$ is a hydrogen atom or a methyl group, and $R_2$ and $R_3$ are each independently a hydrogen atom or a linear or branched alkyl group having 1 to 3 carbon atoms,

[Chemical Formula 5]

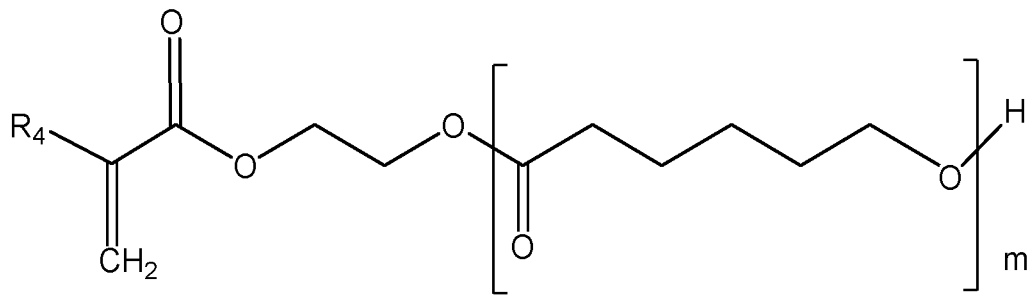
(2)

wherein $R_4$ is a hydrogen atom or a methyl group, and m is an integer of 1 to 5, and

[Chemical Formula 6]

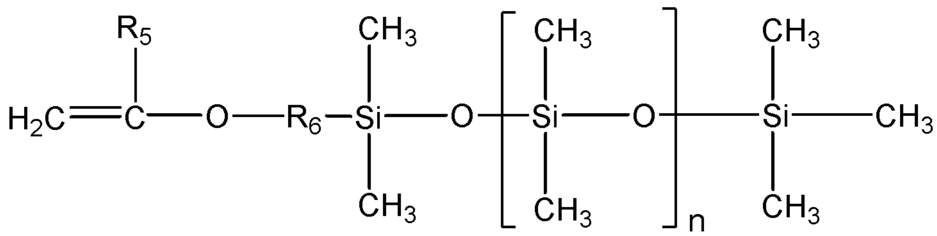
(3)

wherein $R_5$ is a hydrogen atom or a methyl group, $R_6$ is a divalent organic group, and n is 0 or an integer of 1 or more.

The constituent unit (a-1) contained in the component (A) (also referred to as a (meth)acrylic resin) has an amide group, is highly hydrophilic, and easily retains moisture therein. It is therefore considered that moisture adhering to the surface of the water-absorbent antifogging layer obtained by curing the antifogging layer composition is easily absorbed into the cured film. In addition, it is considered that by blending the polyol compound (B), a gap for sufficiently absorbing moisture can be present while maintaining the crosslinking density required as a water-absorbent antifogging layer. For these reasons, it is considered that antifogging performance due to water absorbency is imparted.
The constituent unit (a-2) contained in the resin (A) is a constituent unit having a polycaprolactone structure, and contributes to improvement in flexibility and elasticity of the water-absorbent antifogging layer due to its flexible chemical skeleton. In addition, by containing the constituent unit (a-3) which is more rigid than the constituent unit (a-2), a balance between flexibility and elasticity of the water-absorbent antifogging layer is secured. On the other hand, the polydimethylsiloxane chain of the constituent unit (a-4) contributes to improvement in slipperiness with respect to the water-absorbent antifogging layer. Therefore, when an external force is applied to the water-absorbent antifogging layer, the above two effects of absorbing the external force by the flexibility and elasticity of the water-absorbent antifogging layer and releasing the external force to the outside of the water-absorbent antifogging layer by the slipperiness are synergistically exhibited. As a result, it is considered that the water-absorbent antifogging layer is less likely to be scratched.

In the antifogging layer composition, preferably, the proportion of the constituent unit derived from the monomer (a-1) is 20 mass% or more and 65 mass% or less, the proportion of the constituent unit derived from the monomer (a-2) is 10 mass% or more and 40 mass% or less, and the proportion of the constituent unit derived from the monomer (a-4) is 1 mass% or more and 10 mass% or less, with respect to 100 mass% of all the constituent units constituting the component (A). In the coating composition, the ratio (NCO)/(OH) of the number (NCO) of isocyanate groups contained in the component (C) to the total amount (OH) obtained by adding the number of hydroxyl groups contained in the component (A) and the number of hydroxyl groups contained in the component (B) is preferably 0.15 or more and 0.55 or less.

It is considered that when the composition of the antifogging layer composition is as described above, the equivalent ratio (NCO/OH) is set to a specific range smaller than 1 while maintaining the balance (amount ratio) between the constituent unit (a-2) and the constituent unit (a-3) having a hydroxyl group in the component (A), so that the hardness of the water-absorbent antifogging layer can be increased to an extent that the friction resistance is improved. In addition, it is considered that the equivalent ratio (NCO/OH) is set to a specific range smaller than 1 while maintaining the structural balance between the constituent unit (a-2) and the constituent unit (a-3) having a hydroxyl group in the component (A), so that the crosslinking density of the water-absorbent antifogging layer is increased, and the solvent resistance of the water-absorbent antifogging layer is improved.

The components contained in the water-absorbent antifogging layer composition will be described below.

[Component (A): (meth)acrylic resin]

The water-absorbent antifogging layer composition preferably contains a (meth)acrylic resin as the component (A), that is, a (meth)acrylic resin having a constituent unit derived from a monomer (a-1) represented by the above general formula (1), a constituent unit derived from a monomer (a-2) represented by the above general formula (2), a constituent unit derived from a hydroxyalkyl (meth)acrylate (a-3), and a constituent unit derived from a monomer (a-4) represented by the above general formula (3).

As described above, it is considered that the constituent unit (a-1) is mainly involved in the absorption of water (moisture).

The (meth)acrylic resin can be typically obtained by polymerizing the monomer (a-1), the monomer (a-2), the monomer (a-3), and the monomer (a-4). Details of the polymerization method will be described later.

In the present embodiment, 100% of the constituent units constituting the (meth)acrylic resin need not be a constituent unit derived from a (meth)acrylic monomer. That is, the (meth)acrylic resin may partially (but not entirely) contain a constituent unit derived from a monomer other than a (meth)acrylic monomer.

In order to obtain the effect derived from the (meth)acrylic structure sufficiently, 50 mass% or more of all the constituent units of the (meth)acrylic resin is preferably a constituent unit derived from a (meth)acrylic monomer. More preferably, 80 mass% or more of all the constituent units of the (meth)acrylic resin is a constituent unit derived from a (meth)acrylic monomer. Still more preferably, all (100%) constituent units of the (meth)acrylic resin are a constituent unit derived from a (meth)acrylic monomer.

The monomer (a-1) is not particularly limited as long as the monomer has the structure of the general formula (1) described above. Specific examples thereof include (meth)acrylamide, N-methylacrylamide, N,N-dimethyl (meth)acrylamide, N-ethyl (meth)acrylamide, N,N-diethyl (meth)acrylamide, N-n-propyl (meth)acrylamide, and N-isopropyl (meth)acrylamide.

At least one kind of the monomer (a-1) may be used, and two or more kinds thereof may be used in combination. For example, a (meth)acrylic resin may be obtained by performing a polymerization reaction using two or more kinds of the monomers listed above.

The monomer (a-1) particularly preferably contains N,N-dimethyl (meth)acrylamide or N,N-diethyl (meth)acrylamide from the viewpoint of improving antifogging performance.

In the present embodiment, the content of the constituent unit derived from the monomer (a-1) in the (meth)acrylic resin is preferably 20 to 65 mass% with respect to the total amount of all the constituent units of the (meth)acrylic resin. The content is more preferably 35 to 60 mass%, and still more preferably 40 to 55 mass%. When the content of the constituent unit derived from the monomer (a-1) is 20 mass% or more, a water-absorbent antifogging layer exhibiting antifogging performance suitable for practical use is easily formed. When the content of the constituent unit derived from

the monomer (a-1) is 65 mass% or less, the ratio of constituent units derived from other monomers is prevented from being relatively decreased, making it easy to maintain the balance of the entire composition.

The monomer (a-2) is not particularly limited as long as the monomer has the structure of the general formula (2) .

In the present embodiment, the (meth)acrylic resin contains the constituent unit derived from the monomer (a-2) in an amount of preferably 10 to 40 mass%, more preferably 20 to 38 mass%, and still more preferably 25 to 35 mass% with respect to the total amount of all the constituent units of the (meth)acrylic resin.

When the content of the constituent unit derived from the monomer (a-2) is 10 mass% or more, the flexibility of the water-absorbent antifogging layer is easily secured, and when the content is 40 mass% or less, the elasticity of the water-absorbent antifogging layer is easily secured.

The (meth)acrylic resin may contain a plurality of types of repeating units derived from the monomer (a-2).

The monomer (a-3) is a hydroxyalkyl (meth)acrylate. Specific examples of the hydroxyalkyl (meth)acrylate include hydroxyethyl (meth)acrylate, hydroxypropyl (meth)acrylate, and hydroxybutyl (meth)acrylate. In the present embodiment, among these, hydroxyethyl (meth)acrylate is preferable.

In the present embodiment, the content of the constituent unit derived from the monomer (a-3) in the (meth)acrylic resin is preferably 1 to 30 mass%, more preferably 2 to 20 mass%, and still more preferably 3 to 15 mass% with respect to the total amount of all the constituent units of the (meth)acrylic resin.

The monomer (a-3) has a hydroxyl group as with the monomer (a-2), and undergoes a crosslinking reaction with a polyfunctional isocyanate compound described later to form a water-absorbent antifogging layer.

In the present embodiment, the monomer (a-2) is subjected to a crosslinking reaction with a polyfunctional isocyanate compound together with the monomer (a-3) instead of subjecting only the monomer (a-2) to a crosslinking reaction to form a water-absorbent antifogging layer, thereby yielding a water-absorbent antifogging layer having various physical properties.

As described above, since the (meth)acrylic resin contains the constituent unit derived from the monomer (a-2) and the constituent unit derived from the monomer (a-3), the (meth)acrylic resin has a hydroxyl group as a whole, that is, has a hydroxyl value. Therefore, the (meth)acrylic resin can form a crosslinked structure by being reacted with a polyfunctional isocyanate compound described later together with a polyol compound described later.

The hydroxyl value of the (meth)acrylic resin is preferably 40 to 150 mgKOH/g, more preferably 70 to 140 mgKOH/g, and still more preferably 90 to 130 mgKOH/g. Within the above numerical range, the (meth)acrylic resin reacts with a polyfunctional isocyanate compound (described later) together with a polyol compound (described later), so that the crosslinked structure is easily controlled appropriately. Therefore, the water-absorbent antifogging layer can be hardened while maintaining the flexibility and elasticity of the water-absorbent antifogging layer. Therefore, it is easy to achieve a higher level of compatibility between the scratch resistance, reduction in friction resistance, and solvent resistance of the water-absorbent antifogging layer.

The hydroxyl value means the number of mg of potassium hydroxide required to neutralize acetic acid bonded to a hydroxyl group when 1 g of a sample is acetylated.

The monomer (a-4) is not particularly limited as long as the monomer has the structure of the general formula (3) .

The (meth)acrylic resin may contain a plurality of types of repeating units derived from the monomer (a-4). For example, a (meth)acrylic resin may be obtained by performing a polymerization reaction using two or more kinds of the monomers listed above.

In the present embodiment, the content of the constituent unit derived from the monomer (a-4) in the (meth)acrylic resin is preferably 1 to 10 mass%, more preferably 2 to 8 mass%, and still more preferably 3 to 7 mass% with respect to the total amount of all the constituent units of the (meth)acrylic resin.

When the content of the constituent unit derived from the monomer (a-4) is 1 mass% or more, a water-absorbent antifogging layer that satisfies scratch resistance is easily obtained. When the content is 10 mass% or less, a homogeneous (meth)acrylic resin is easily synthesized.

The (meth)acrylic resin may or may not include any constituent unit (constituent unit (a-5)) other than the constituent unit (a-1), the constituent unit (a-2), the constituent unit (a-3), and the constituent unit (a-4). Examples of the constituent unit (a-5) include constituent units derived from monomers represented below. By including such a constituent unit in the (meth)acrylic resin, the glass transition temperature of the (meth)acrylic resin and the physical properties (hardness, softness, and the like of the water-absorbent antifogging layer) of the water-absorbent antifogging layer can be adjusted and optimized.

Examples of the constituent unit (a-5) include constituent units derived from a monomer represented by the general formula $CH_2$=CR-COO-R' where R is a hydrogen atom or a methyl group, and R' is an alkyl group, a monocyclic or polycyclic cycloalkyl group, an aryl group, or an aralkyl group.

Specific examples of the monomer include methyl (meth)acrylate, ethyl (meth)acrylate, n-butyl (meth)acrylate, isobutyl (meth)acrylate, tert-butyl (meth)acrylate, 2-ethylhexyl (meth)acrylate, isodecyl (meth)acrylate, n-lauryl (meth)acrylate, n-stearyl (meth)acrylate, phenyl (meth)acrylate, and benzyl (meth)acrylate.

Among them, a monomer in which R' is an alkyl group having 1 to 8 carbon atoms is preferable, a monomer

in which R' is an alkyl group having 1 to 6 carbon atoms is more preferable, and a monomer in which R' is an alkyl group having 1 to 4 carbon atoms is still more preferable.

The (meth)acrylic resin may include a plurality of types of repeating units corresponding to the constituent unit (a-5). For example, a (meth)acrylic resin may be obtained by performing a polymerization reaction using two or more kinds of the monomers listed above as specific examples.

When the (meth)acrylic resin contains the constituent unit (a-5), the content thereof is preferably 1 to 40 mass%, more preferably 3 to 30 mass%, and still more preferably 5 to 20 mass% with respect to the total amount of all the constituent units of the (meth)acrylic resin.

The mass average molecular weight (Mw) of the (meth)acrylic resin is not particularly limited, but is preferably 10,000 to 100,000, more preferably 20,000 to 70,000, and still more preferably 30,000 to 60,000. When the mass average molecular weight is 10,000 or more, it is easy to obtain desired antifogging performance, and when the mass average molecular weight is 100,000 or less, the coating composition tends to be excellent in application suitability when applied to a spectacle lens.

The mass average molecular weight can be determined by gel permeation chromatography (GPC) using polystyrene as a standard substance.

The glass transition temperature of the (meth)acrylic resin is not particularly limited, but is preferably 20 to 120°C, more preferably 30 to 110°C, and still more preferably 35 to 100°C.

The glass transition temperature of the (meth)acrylic resin can be determined by various methods, and can be determined, for example, based on the following Fox's equation.

$$1/Tg = (W_1/Tg_1) + (W_2/Tg_2) + (W_3/Tg_3) + ... + (W_n/Tg_n)$$

wherein Tg represents the glass transition temperature (K) of the (meth) acrylic resin, $W_1$, $W_2$, $W_3$ ... $W_n$ each represent the mass fraction of each monomer, $Tg_1$, $Tg_2$, $Tg_3$ ... $Tg_n$ each represent the glass transition temperature (K) of a homopolymer composed of a monomer corresponding to the mass fraction of each monomer.

In the present specification, the glass transition temperature of the (meth)acrylic resin (not the glass transition temperature of the water-absorbent antifogging layer, but the glass transition temperature of the (meth)acrylic resin alone) means a glass transition temperature determined based on the above equation. Note that the glass transition temperature of a monomer whose glass transition temperature is unknown, such as special monomers or polyfunctional monomers is determined using only a monomer whose glass transition temperature is known.

The (meth)acrylic resin can be typically obtained by a polymerization reaction. The polymerization reaction may be performed by various methods such as radical polymerization, cationic polymerization, and anionic polymerization, and among them, radical polymerization is preferable. The polymerization may be any of solution polymerization, suspension polymerization, emulsion polymerization, and the like. Among them, solution polymerization is preferable from the viewpoint of precise control of polymerization and the like.

As the polymerization initiator for radical polymerization, a known polymerization initiator can be used. Examples of the polymerization initiator include azo-based initiators such as azobisisobutyronitrile, 2,2-azobis(2-methylbutyronitrile), 2,2-azobis(2-methylpropionitrile), and 2,2-azobis(2,4-dimethylvaleronitrile); peroxide-based initiators such as benzoyl peroxide, t-butyl peroxyoctanoate, diisobutyl peroxide, di(2-ethylhexyl)peroxypivalate, decanoyl peroxide, t-butyl peroxy-2-ethylhexanoate, and t-butyl peroxybenzoate; and redox-based initiators combining an oxidizing agent and a reducing agent, such as hydrogen peroxide and an iron(II) salt, and a persulfate and sodium bisulfite. These may be used singly or in combination of two or more kinds thereof.

The blending amount of the polymerization initiator is not particularly limited, but is preferably 0.001 to 10 parts by mass based on 100 parts by mass of the total amount of the mixed liquid of monomers to be polymerized.

In the polymerization reaction, a known chain transfer agent, a polymerization inhibitor, a molecular weight modifier, or the like may be appropriately used. Further, the polymerization reaction may be performed in one stage or in two or more stages. The temperature of the polymerization reaction is not particularly limited, but is typically in a range of 50°C to 200°C, preferably 80°C to 150°C.

[Component (B): polyol compound]

The water-absorbent antifogging layer composition preferably contains a polyol compound. When the coating composition contains the polyol compound, the polyol compound reacts with the polyfunctional isocyanate compound described later together with the (meth)acrylic resin, making it possible to form a water-absorbent antifogging layer having more excellent antifogging durability. The number of hydroxyl groups of the polyol compound in one molecule is 2 or more, preferably 2 to 6, and more preferably 2 to 4.

The polyol compound preferably contains at least one or more polyol compounds selected from the group

consisting of a polycaprolactone polyol, a polycarbonate polyol, and a polyether polyol. The chemical structures of these polyol compounds are moderately flexible and elastic. Therefore, such polyol compounds can further improve the flexibility and elasticity of the water-absorbent antifogging layer.

The polycaprolactone polyol can be used without particular limitation as long as it is a compound having a ring-opened structure of caprolactone and two or more hydroxyl groups in one molecule.

The polycarbonate polyol can be used without particular limitation as long as it is a compound having a carbonate group represented by -O-(C=O)-O- and two or more hydroxyl groups in one molecule. The polycarbonate polyol can be obtained by reacting one or more kinds of polyol raw materials (polyhydric alcohols) with a carbonate ester or phosgene.

The polyol raw material is not particularly limited, and examples thereof include aliphatic polyols, polyols having an alicyclic structure, and aromatic polyols. In the present embodiment, an aliphatic polyol having no alicyclic structure is preferable from the viewpoint of the flexibility of the water-absorbent antifogging layer.

Examples of the carbonate ester include aliphatic carbonate esters such as dimethyl carbonate and diethyl carbonate; aromatic carbonate esters such as diphenyl carbonate; and cyclic carbonate esters such as ethylene carbonate. Among them, an aliphatic carbonate ester is preferable, and dimethyl carbonate is particularly preferable from the viewpoint of availability and ease of production.

The polyether polyol can be used without particular limitation as long as it is a compound having an ether bond (-O-) and two or more hydroxyl groups in one molecule.

Specific examples of the compound include polyether polyols obtained by addition polymerization of an alkylene oxide such as ethylene oxide, propylene oxide, or butylene oxide, using, as an initiator, a compound having two or more, preferably two or three active hydrogen groups such as a low molecular weight polyol such as ethylene glycol, 1,2-propanediol, 1,3-propanediol, 1,2-butanediol, 1,3-butanediol, 1,4-butanediol, 1,5-pentanediol, 1,6-hexanediol, 1,8-octanediol, 1,9-nonanediol, 3-methyl-1,5-pentanediol, 3,3-dimethylolheptane, diethylene glycol, dipropylene glycol, neopentyl glycol, cyclohexane-1,4-diol, cyclohexane-1,4-dimethanol, dimer acid diol, bisphenol A, bis($\beta$-hydroxyethyl)benzene, xylylene glycol, glycerin, trimethylolpropane, and pentaerythritol; or a low molecular weight polyamine such as ethylenediamine, propylenediamine, toluenediamine, meta-phenylenediamine, diphenylmethanediamine, and xylylenediamine; and polyether polyols obtained by ring-opening polymerization of a cyclic ether monomer including an alkyl glycidyl ether such as methyl glycidyl ether, an aryl glycidyl ether such as phenyl glycidyl ether, and tetrahydrofuran.

In the present embodiment, the polyol compound may be a compound corresponding to a plurality of polycaprolactone polyols, polycarbonate polyols, and polyether polyols. The polyol compound may be, for example, a polyether polyester polyol having an ether bond and an ester bond.

The polyol compound may also contain a plurality of types of polycaprolactone polyols, polycarbonate polyols, and polyether polyols.

The hydroxyl value of the polyol compound is preferably 50 to 500 mgKOH/g, more preferably 100 to 350 mgKOH/g, and still more preferably 150 to 250 mgKOH/g. By setting the amount of the hydroxyl group to an appropriate amount, the crosslinked structure formed by the reaction with the polyfunctional isocyanate compound described below is controlled, thus making it easy to improve the flexibility, elasticity, and the like of the water-absorbent antifogging layer.

In the present embodiment, the mass average molecular weight (Mw) of the polyol compound is preferably 450 to 2,500, more preferably 500 to 1,500, and still more preferably 500 to 700. By setting the molecular weight to an appropriate value, it is possible to more easily achieve both suppression of the change in appearance of the water-absorbent antifogging layer due to improvement in flexibility and elasticity and durability of the water-absorbent antifogging layer such as gasoline resistance, at a higher level.

The content of the polyol compound in the antifogging layer composition is preferably 5 to 200 parts by mass, more preferably 15 to 180 parts by mass, still more preferably 20 to 150 parts by mass, still even more preferably 20 to 100 parts by mass, still even more preferably 20 to 50 parts by mass, and still even more preferably 20 to 40 parts by mass with respect to 100 parts by mass of the (meth)acrylic resin. Within the above numerical range, the performance derived from the polyol compound is easily obtained, and the balance with other components is easily achieved.

In the present embodiment, the polyol compound preferably contains a polycaprolactone polyol among the polycaprolactone polyol, the polycarbonate polyol, and the polyether polyol described above, and particularly preferably contains a polycaprolactone diol (a compound having a caprolactone structure and two hydroxyl groups) among polycaprolactone polyols.

This is because there is a tendency that the polycaprolactone diol as the polyol compound tends to have good compatibility with (meth)acrylic resin as the component (A), which has the structure of the general formula (2) described above, that is, the caprolactone structure, and also tends to improve antifogging performance without excessively increasing the crosslinking density.

[Component (C): polyfunctional isocyanate compound]

The water-absorbent antifogging layer composition preferably contains a polyfunctional isocyanate compound

as the component (C). When the antifogging layer composition contains the polyfunctional isocyanate compound, the hydroxyl groups of the constituent unit (a-2) and the constituent unit (a-3) contained in the (meth)acrylic resin as the component (A) and the hydroxyl group of the polyol compound as the component (B), and the polyfunctional isocyanate compound cause a crosslinking reaction, so that a water-absorbent antifogging layer having excellent antifogging durability is obtained.

The polyfunctional isocyanate compound is a compound having two or more isocyanate groups (including isocyanate groups protected by a leaving group) in one molecule. Preferably, the number of functional groups of the polyfunctional isocyanate compound is more preferably 2 to 6 per molecule, and still more preferably 2 to 4 per molecule.

Examples of the polyfunctional isocyanate compound include aliphatic diisocyanates such as lysine isocyanate, hexamethylene diisocyanate, and trimethylhexane diisocyanate; cyclic aliphatic diisocyanates such as hydrogenated xylylene diisocyanate, isophorone diisocyanate, methylcyclohexane-2,4-(or 2,6)-diisocyanate, 4,4'-methylenebis(cyclohexyl isocyanate), and 1,3-(isocyanatomethyl)cyclohexane; and tri- or higher functional isocyanates such as lysine triisocyanate.

As the polyfunctional isocyanate compound as the component (C), in addition to those described above, a multimer thereof such as a biuret type, an isocyanurate type, or an adduct type may be used. Among them, a biuret type polyfunctional isocyanate compound having moderate rigidity is preferable.

In the present embodiment, the content of the polyfunctional isocyanate compound in the water-absorbent antifogging layer composition is not particularly limited as long as it is blended according to the equivalent ratio (NCO)/(OH) described later. The content of the polyfunctional isocyanate compound in the antifogging layer composition is usually about 5 to 100 parts by mass, preferably 7 to 75 parts by mass, more preferably 10 to 60 parts by mass, still more preferably 10 to 50 parts by mass, still even more preferably 15 to 40 parts by mass, and still even more preferably 20 to 30 parts by mass with respect to 100 parts by mass of the (meth)acrylic resin. Within this numerical range, it is considered that necessary and sufficient crosslinking is performed in the water-absorbent antifogging layer.

The molar amount (that is, equivalent ratio (NCO)/(OH)) of the isocyanate groups (including a blocked isocyanate group) contained in the polyfunctional isocyanate compound to the hydroxyl groups contained in the (meth)acrylic resin and the polyol compound is preferably in a range of 0.15 to 0.55. When the equivalent ratio (NCO)/(OH) is within the above range, the crosslinking density becomes sufficiently high, and as a result, functions such as antifogging performance and solvent resistance as a water-absorbent antifogging layer become sufficient. The equivalent ratio (NCO)/(OH) is preferably 0.25 to 0.50, and more preferably 0.35 to 0.45 from the viewpoint of functions such as antifogging performance and solvent resistance.

<Form of water-absorbent antifogging layer composition>

The water-absorbent antifogging layer composition may be a one-component type, that is, a state in which all components other than a solvent are substantially uniformly mixed (dissolved or dispersed) in the solvent. When the polyfunctional isocyanate compound is a blocked isocyanate, the one-component type is preferable.

As another aspect, the water-absorbent antifogging layer composition may be a two-component type. By preparing the water-absorbent antifogging layer composition as a two-component type, the storage stability of the water-absorbent antifogging layer composition can be improved.

For example, the water-absorbent antifogging layer composition may be composed of (1) a liquid A containing a (meth)acrylic resin and/or a polyol compound but not containing a polyfunctional isocyanate compound, and (2) a liquid B containing a polyfunctional isocyanate compound but not containing a (meth)acrylic resin and a polyol compound. The liquid A and the liquid B may be stored in separate containers, and the liquid A and the liquid B may be mixed immediately before use (application).

In this case, components (additives and the like) other than the (meth)acrylic resin, the polyol compound, and the polyfunctional isocyanate compound may be contained in the liquid A, contained in the liquid B, or prepared in another container.

In particular, when the polyfunctional isocyanate compound is not a blocked isocyanate (that is, when the isocyanate group is present in the form of -NCO in the system), the water-absorbent antifogging layer composition is preferably a two-component type.

<Solvent>

The coating liquid containing the water-absorbent antifogging layer composition may contain a solvent. The use of the solvent makes it easy to adjust the viscosity and the solid content of the water-absorbent antifogging layer composition.

Examples of the solvent include aromatic hydrocarbon solvents such as toluene and xylene; alcohol solvents such as methanol, ethanol, isopropyl alcohol, n-butanol, t-butanol, isobutanol, and diacetone alcohol; ketone solvents

such as acetone, methyl ethyl ketone, methyl isobutyl ketone, and cyclohexanone; ester solvents such as ethyl acetate, propyl acetate, butyl acetate, and isobutyl acetate; and glycol ether solvents such as propylene glycol monomethyl acetate, propylene glycol monomethyl ether, and propylene glycol monomethyl ether acetate.

Among them, t-butanol, diacetone alcohol, methyl ethyl ketone, ethyl acetate, and propylene glycol monomethyl ether acetate are preferable from the viewpoint of low reactivity with isocyanate, solubility, drying property, and the like.

The content of the solvent in the coating liquid is preferably 20 to 90 mass%, more preferably 30 to 85 mass%, and still more preferably 35 to 80 mass% from the viewpoint of controlling the thickness of the water-absorbent antifogging layer.

<Other additives>

The coating liquid may contain additives such as a curing catalyst, an ultraviolet absorber, a light stabilizer, a surfactant, a leveling agent, and an antifoaming agent as necessary.

When the additive is used for the coating liquid, the content of the additive is, for example, preferably 0.001 to 5 mass%, more preferably 0.01 to 4 mass%, and still more preferably 0.1 to 3 mass% with respect to the total mass of the antifogging layer composition.

The coating liquid can be prepared by dissolving or dispersing each component used as necessary in a solvent.

Each component can be dissolved or dispersed in the solvent simultaneously or sequentially in any order. A specific dissolution or dispersion method is not particularly limited, and a known method can be adopted without any limitation.

<Viscosity>

The viscosity of the coating liquid containing the water-absorbent antifogging layer composition is usually about 10 to 80 mPa · s, preferably 15 to 70 mPa · s, more preferably 20 to 65 mPa · s, still more preferably 20 to 50 mPa · s, and may also be 25 to 45 mPa · s at 15°C from the viewpoint of forming a uniform layer and obtaining a spectacle lens having more excellent antifogging performance.

When an antifogging layer is formed using a coating liquid having high viscosity by a dip method, a liquid pool is likely to occur, which may cause a defect. However, in the present embodiment, even when the viscosity of the coating liquid is high, the water-absorbent antifogging layer can be formed without causing a liquid pool. Therefore, as the viscosity of the coating liquid increases, the effect of the present disclosure tends to be more remarkably exhibited.

In the present disclosure, the viscosity is a viscosity measured in accordance with JIS Z 8803: 2011.

Specifically, the viscosity is measured by a method described in Examples described later.

<Solid content>

The solid content of the coating liquid containing the water-absorbent antifogging layer composition is preferably 10.0 to 40.0 mass% from the viewpoint of easily forming a uniform layer and obtaining a spectacle lens having more excellent antifogging performance. When the solid content is 10.0 mass% or more, the thickness of the water-absorbent antifogging layer can be increased. When the solid content is 40.0 mass% or less, a water-absorbent antifogging layer having a uniform thickness can be obtained. The solid content of the coating liquid is more preferably 12.0 to 30.0 mass%, still more preferably 15.0 to 30.0 mass%, and still even more preferably 16.5 to 24.5 mass% from the viewpoint of controlling the thickness of the water-absorbent antifogging layer and forming a layer having a uniform thickness.

In addition, the total content of the components (A), (B), and (C) in the solid content of the coating liquid is preferably 60 mass% or more, more preferably 80 mass% or more, still more preferably 90 mass% or more, and still even more preferably 95 mass% or more, preferably 100 mass% or less, and may be substantially 100 mass% from the viewpoint of improving the antifogging performance.

[Other layers]

In the method for producing a spectacle lens of the present embodiment, the water-absorbent antifogging layer may be formed on at least one surface of the substrate, and another layer may or may not be further formed on the one surface.

In addition, in the method for producing a spectacle lens of the present embodiment, the water-absorbent antifogging layer and/or another layer may or may not be formed on the other surface of the substrate.

The method for producing a spectacle lens of the present embodiment may include a step of forming a functional layer other than the water-absorbent antifogging layer from the viewpoint of imparting a function other than the antifogging

performance to the spectacle lens.

Examples of the functional layer include an antifogging layer such as a hydrophilic antifogging layer, a hard coat layer, an antireflection layer, and a primer layer. As the functional layer, a known functional layer can be used.

The functional layer may be formed by a spin coating method, and may be formed by, for example, an air spray method, an airless spray method, an electrostatic coating method, a roll coater method, a flow coater method, a dipping method, or the like.

The hydrophilic antifogging layer can be formed using, for example, a surfactant such as an anionic surfactant, a cationic surfactant, an amphoteric surfactant, and a nonionic surfactant; or an organic polymer compound such as polyethylene glycol and polyethylene glycol (meth)acrylate.

The thickness of the hydrophilic antifogging layer is usually about 0.5 to 35 nm from the viewpoint of antifogging performance and ease of application.

The hard coat layer can be formed using, for example, a resin composition containing a silicone resin. The resin composition may contain metal fine particles, colloidal silica, and the like.

The thickness of the hard coat layer is usually about 0.5 to 5 um from the viewpoint of scratch resistance, durability, and the like.

The antireflection layer has, for example, a configuration in which a low refractive index layer and a high refractive index layer are alternately arranged. The number of layers included in the antireflection layer is usually about 4 to 10.

The refractive index of the low refractive index layer is usually about 1.35 to 1.80 at a wavelength of 500 to 550 nm. The low refractive index layer is made of an inorganic oxide such as silicon oxide.

The refractive index of the high refractive index layer is usually about 1.90 to 2.60 at a wavelength of 500 to 550 nm. The high refractive index layer is made of, for example, an inorganic oxide such as zirconium oxide, tantalum pentoxide, yttrium oxide, titanium oxide, niobium pentoxide, or aluminum oxide.

The antireflection layer can be formed by vapor deposition.

The primer layer can be formed using, for example, an acrylic resin, a melamine resin, a urethane resin, an epoxy resin, a polyvinyl acetal resin, an amino resin, a polyester resin, a polyamide resin, a vinyl alcohol resin, a styrene resin, a silicone resin, or a mixture or copolymer thereof.

For example, a water-absorbent antifogging layer can be formed on one surface and a functional layer can be formed on the other surface by a method for producing a spectacle lens in which the following steps 1 to 3 are sequentially performed:

Step 1: applying a coating liquid containing the antifogging layer composition to one surface of the substrate by a spin coating method to form a water-absorbent antifogging layer;
Step 2: forming an antireflection layer on the other surface of the substrate; and
Step 3: forming a hydrophilic antifogging layer on the other surface having the antireflection layer obtained in the step 2.

Here, Fig. 1 is a schematic cross-sectional view of a spectacle lens produced according to an embodiment of the present disclosure. As illustrated in 1a of Fig.1, in a spectacle lens produced by the production method through the steps 1 to 3, for example,

[a water-absorbent antifogging layer 32, a substrate 11, an antireflection layer 22, a hydrophilic antifogging layer 23] are built up in this order.

In the above production method, it is preferable that one surface of the substrate is a concave surface and the other surface of the substrate is a convex surface. By employing a configuration in which a layer of the convex surface on the side that easily comes into contact with an external object is composed of an antireflection layer and a hydrophilic antifogging layer, and the outermost layer on the concave surface on the side that hardly comes into contact with an external object is composed of a water-absorbent antifogging layer, a spectacle lens that can have antireflective properties while having antifogging performance can be produced. In addition, by sequentially performing the steps 1 to 3, there is no possibility that cracking occurs in the antireflection layer due to the firing temperature at the time of forming the water-absorbent antifogging layer.

A method for producing a spectacle lens including a step of forming a hard coat layer on at least the other surface of the substrate before performing the step 1 or the step 2 is also one of preferred embodiments. By the above production method, the water-absorbent antifogging layer can be formed on one surface, and the functional layer can be formed on the other surface.

As illustrated in 2a of Fig. 1 or 3a of Fig. 1, in a spectacle lens produced by a production method including the steps 1 to 3 and the step of forming a hard coat layer (HC), for example,

[the water-absorbent antifogging layer 32, the substrate 11, an HC 21, the antireflection layer 22, the hydrophilic antifogging layer 23]
may be built up in this order, or
[the water-absorbent antifogging layer 32, an HC 31, the substrate 11, the HC 21, the antireflection layer 22, the hydrophilic antifogging layer 23]
may be built up in this order.

In the above production method, it is preferable that one surface of the substrate is a concave surface and the other surface of the substrate is a convex surface. By employing a configuration in which a layer of the convex surface on the side that easily comes into contact with an external object is composed of an antireflection layer and a hydrophilic antifogging layer, and the outermost layer on the concave surface on the side that hardly comes into contact with an external object is composed of a water-absorbent antifogging layer, a spectacle lens that can have antireflective properties and scratch resistance while having antifogging performance can be produced.

In addition, as another embodiment, a water-absorbent antifogging layer can be formed on one surface and a functional layer can be formed on the other surface by a method for producing a spectacle lens in which a hard coat layer is formed on at least the other surface of the substrate before or after performing the step 1, and a hydrophilic antifogging layer is formed on the hard coat layer on the other surface side.

In the other embodiment, specifically, the following hard coat layer forming step, step 1, and step 3' are performed:

Hard coat layer forming step: forming a hard coat layer on at least the other surface of the substrate before performing the step 1, or forming a hard coat layer on the other surface of the substrate between the step 1 and the step 3';
Step 1: applying a coating liquid containing the water-absorbent antifogging layer composition to one surface of the substrate by a spin coating method to form a water-absorbent antifogging layer; and
Step 3': forming a hydrophilic antifogging layer on the hard coat layer on the other surface obtained in the hard coat layer forming step.

Here, Fig. 2 is a schematic cross-sectional view of a spectacle lens produced according to an embodiment of the present disclosure. As illustrated in 1b of Fig. 2 or 2b of Fig. 2, in a spectacle lens produced by the production method through the hard coat layer forming step, the step 1, and the step 3', for example,

[the water-absorbent antifogging layer 32, the substrate 11, the HC 21, the hydrophilic antifogging layer 23]
may be built up in this order, or
[the water-absorbent antifogging layer 32, the HC 31, the substrate 11, the HC 21, the hydrophilic antifogging layer 23]
may be built up in this order.

In the above production method, it is preferable that one surface of the substrate is a concave surface and the other surface of the substrate is a convex surface. By employing a configuration in which a layer of the convex surface on the side that easily comes into contact with an external object is composed of a hard coat layer and a hydrophilic antifogging layer, and the outermost layer on the concave surface on the side that hardly comes into contact with an external object is composed of a water-absorbent antifogging layer, a spectacle lens that can have scratch resistance while having antifogging performance can be produced.

In the present disclosure, as for the examples of components, contents, and physical properties, matters exemplified or described as a preferable range in the detailed description of the invention may be combined with each other arbitrarily.

In addition, by adjusting the composition described in Examples so as to be the composition described in the detailed description of the invention, the embodiment according to the present disclosure can be performed in a similar manner to Examples in the entire claimed composition range.

## Examples

Next, the present disclosure will be described in more detail by way of Examples, but the present disclosure is not limited in any way by these Examples.

### <Measurement and evaluation>

Measurement and evaluation of the following items were performed for the coating liquid obtained in the following Production Example and the spectacle lenses obtained in Examples.

(Hydroxyl value)

The hydroxyl value was measured and calculated according to the method specified in "7.1 Neutralization titration method" of JIS K 0070: 1992 "Test methods for acid value, saponification value, ester value, iodine value, hydroxyl value and unsaponifiable matter of chemical products".

The value of the acid value used for calculating the hydroxyl value was measured and calculated according to the method specified in "3.1 Neutralization titration method" of the JIS standard described above.

(Number average molecular weight (Mn), mass average molecular weight (Mw), polydispersity index (Mw/Mn))

The number average molecular weight, mass average molecular weight, and polydispersity index were measured and calculated by gel permeation chromatography (GPC). The apparatus, conditions, and the like used are as follows.

· Equipment used: HLC-8220GPC (manufactured by Tosoh Corporation)
Column used: TSKgel SuperHZM-M, TSKgel GMHXL-H, TSKgel G2500HXL, TSKgel G5000HXL (manufactured by Tosoh Corporation)
· Column temperature: 40°C
Standard substance: TSKgel standard polystyrene A1000, A2500, A5000, F1, F2, F4, F10 (manufactured by Tosoh Corporation)
· Detector: RI (refractive index) detector
· Eluent: tetrahydrofuran
· Flow rate: 1 ml/min

(Viscosity measurement)

The viscosity was measured at 15°C in accordance with JIS Z 8803: 2011 using a vibration type viscometer VISCOMATE VM-10A, manufactured by SEKONIC Corporation.

(Measurement of thickness of water-absorbent antifogging layer)

The thickness of the water-absorbent antifogging layer of the obtained spectacle lens was measured using a noncontact film thickness measurement system FF8 manufactured by SystemRoad Co., Ltd.

(Antifogging performance)

Breath was blown for 10 seconds onto the surface of the antifogging layer of the obtained spectacle lens under the conditions of a room temperature of 25°C and a humidity of 40%. The state of the antifogging layer from the start to the end of blowing the breath was visually observed, and evaluation was performed according to the following evaluation criteria. When antifogging layers were formed on both surfaces of the spectacle lens, each antifogging layer was evaluated.

A: Fogging is not observed at all (excellent antifogging performance)
B: Fogging is observed, and it takes 10 seconds or more for the fogging to be eliminated (poor antifogging performance)

(Liquid pool)

For the water-absorbent antifogging layer, the liquid pool was evaluated by visual observation according to the following evaluation criteria.

A: There is no large change in the thickness of the layer from the central portion to the peripheral portion, and the water-absorbent antifogging layer is formed with a uniform thickness.
B: A liquid pool is generated in the peripheral portion.

<Preparation of coating liquid containing water-absorbent antifogging layer composition>

[Production Example]

(Synthesis of (meth)acrylic resin)

Into a 500 ml-flask equipped with a stirrer, a thermometer, a condenser, and a nitrogen gas inlet tube, 150 parts by mass of propylene glycol monomethyl acetate (PGMAC) was charged, and the temperature was raised to 110°C.

Separately, 25 parts by mass of dimethylacrylamide (DMAA), 35 parts by mass of polycaprolactone-modified hydroxyethyl acrylate (PLACCEL FA2D, manufactured by Daicel Corporation), 10 parts by mass of 2-hydroxylethyl methacrylate (HEMA), 5 parts by mass of polydimethylsiloxane modified with methacrylate at one terminal (Silaplane FM-0721, manufactured by JNC Corporation, molecular weight: 5,000), 25 parts by mass of methyl methacrylate, and 1 part by mass of 1,1'-azobis(cyclohexane-1-carbonitrile) (V-40, manufactured by Wako Pure Chemical Industries, Ltd.) were mixed. The mixed monomer was added dropwise to the 500 ml-flask over 2 hours with stirring, and reacted for 5 hours.

The heating was stopped and the mixture was cooled to room temperature to obtain a resin solution containing a (meth)acrylic resin (solid content ratio: about 40 mass%).

The obtained (meth)acrylic resin had a hydroxyl value of 57 mgKOH/g, a number average molecular weight (Mn) of 12,000, a mass average molecular weight (Mw) of 44,000, and a polydispersity index (Mw/Mn) of 3.67. The glass transition temperature (Tg) of the (meth)acrylic resin calculated from the blending ratio of the used monomers based on the above Fox's equation was 32.8°C.

(Preparation of coating liquid)

The (meth)acrylic resin obtained above, polycaprolactone diol (PLACCEL 205U, manufactured by Daicel Corporation, molecular weight: 530, hydroxyl value: 207 to 217 mgKOH/g), a polyfunctional isocyanate compound (24A-100, manufactured by Asahi Kasei Corporation, biuret type hexamethylene diisocyanate, isocyanate group content: 23.5 mass%, solid content: 100 mass%), propylene glycol monomethyl ether acetate, diacetone alcohol, methyl ethyl ketone, t-butanol, and ethyl acetate were mixed to obtain a mixture. The respective contents of components in the obtained mixture are as follows.

(Meth)acrylic resin: 14.7 mass%
Polycaprolactone diol: 4.4 mass%
Polyfunctional isocyanate compound: 3.4 mass%
Propylene glycol monomethyl ether acetate: 28.5 mass%
Diacetone alcohol: 18.5 mass%
Methyl ethyl ketone: 13.5 mass%
t-Butanol: 8.5 mass%
Ethyl acetate: 8.5 mass%

Then, ethyl acetate, methyl ethyl ketone, and diacetone alcohol were added and mixed with the above mixture to adjust the viscosity to 35.8 mPa · s and the solid content to 21.7 mass%, thereby preparing a coating liquid containing a water-absorbent antifogging layer composition.

The measured value of the hydroxyl value of the mixture when 100 parts by mass of the (meth)acrylic resin and 30 parts by mass of a polyol compound (polycaprolactone diol) were uniformly mixed was 93 mgKOH/g.

<Production of spectacle lens>

[Example 1]

As a substrate, a thiourethane-based plastic lens "EYNOA" (manufactured by HOYA Corporation, refractive index: 1.67) was used.

The coating liquid obtained in the above Production Example was applied to the convex surface or the concave surface of the substrate by a spin coating method under the conditions shown in Table 1. After the application, pre-firing was performed at a temperature of 100°C for 20 minutes, and then main firing was performed at a temperature of 120°C for 120 minutes to produce a spectacle lens having a single antifogging layer on the substrate. The thickness of the water-absorbent antifogging layer, the evaluation results of antifogging performance and liquid pool of the obtained spectacle lens are shown in Table 1.

[Examples 2 to 5]

Spectacle lenses were produced by the same operation as in Example 1 except that the coating liquid was applied onto the substrate under the conditions shown in Table 1.

[Table 1]

Table 1

| | | | First stage | | Second stage | | Water-absorbent antifogging layer thickness | | Evaluation | |
|---|---|---|---|---|---|---|---|---|---|---|
| | Application surface | Supply amount of coating liquid (ml) | Rotation speed (rpm) | Time (sec) | Rotation speed (rpm) | Time (sec) | Central portion (μm) | Outer peripheral portion (μm) | Antifogging properties | Liquid pool |
| Example 1 | Convex surface | 3 | 360 | 4 | 1,500 | 2 | 9.2 | 8.8 | A | A |
| Example 2 | Convex surface | 3 | 360 | 4 | 1,050 | 2 | 11.8 | 11.0 | A | A |
| Example 3 | Convex surface | 2 | 360 | 4 | 1,050 | 2 | 10.5 | 10.2 | A | A |
| Example 4 | Convex surface | 4 | 360 | 4 | 720 | 2 | 14.1 | 13.9 | A | A |
| Example 5 | Concave surface | 2 | 360 | 4 | 1,050 | 2 | 10.1 | 10.1 | A | A |

[Example 6]

(Adjustment of hard coat composition)

Into a glass container equipped with a magnetic stirrer, 17 parts by mass of γ-glycidoxypropyltrimethoxysilane, 30 parts by mass of methanol, and 28 parts by mass of water-dispersed colloidal silica (solid content: 40 mass%, average particle size: 15 um) were charged and sufficiently mixed, and the mixture was stirred at a flow temperature of 5°C for 24 hours. Next, 15 parts by mass of propylene glycol monomethyl ether, 0.05 parts by mass of a silicone-based surfactant, and 1.5 parts by mass of aluminum acetylacetonate as a curing agent were added, and the mixture was sufficiently stirred and then filtered to prepare a hard coat composition.

(Production of spectacle lens)

As a substrate, a thiourethane-based plastic lens "EYNOA" (manufactured by HOYA Corporation, refractive index: 1.67) was used.

(1) The hard coat composition was applied to the substrate by a dipping method (pulling speed: 30 cm/min), and heated at a heating temperature of 90°C for 120 minutes to form a hard coat layer on both surfaces of the substrate. The thickness of the hard coat layer on the convex surface side was 3.06 um at the central portion of the lens substrate. The thickness of the hard coat layer on the concave surface side was 2.86 um at the central portion of the lens substrate.
(2) Next, the coating liquid obtained in the above Production Example was applied onto the hard coat layer on the concave surface side of the substrate by a spin coating method. After the application, pre-firing was performed at 100°C for 20 minutes, and then main firing was performed at 120°C for 120 minutes to form a water-absorbent antifogging layer.

The conditions for the spin coating method, the thickness of the water-absorbent antifogging layer, and the evaluation results of the liquid pool at this time are shown in Table 2.

(3) Next, an antireflection layer (the uppermost layer was a silicon oxide layer) having a thickness of 500 nm was formed on the hard coat layer on the convex surface side of the substrate by a vacuum vapor deposition method. Specifically, a silicon oxide layer as a first base layer (low refractive index layer) was formed on the hard coat layer formed on the convex surface of the substrate by a vacuum vapor deposition method. Then, a zirconium oxide layer and a silicon oxide layer were alternately built up as second to seventh layers on the base layer to form an antireflection layer so that the uppermost layer thereof is a silicon oxide layer.

(4) Next, a coating liquid for a hydrophilic antifogging layer was applied onto the antireflection layer on the convex surface side of the substrate by a spin coating method. After the application, firing was performed at 60°C for 120 minutes to form a hydrophilic antifogging layer having a thickness of 20 nm.

As the coating liquid for the hydrophilic antifogging layer, a solution prepared by dissolving 5 g of sodium polyoxyethylene lauryl ether sulfate (anionic surfactant: NIKKOL SBL-4N, manufactured by Nikko Chemicals Co., Ltd.) in 95 g of water was used.

As illustrated in 3a of Fig. 1, the spectacle lens obtained in Example 6 has a layer structure of [water-absorbent antifogging layer 32, HC 31, substrate 11, HC 21, antireflection layer 22, hydrophilic antifogging layer 23] (3a in Fig. 1) from the concave surface side.

The antifogging performance of the obtained spectacle lens was evaluated as "A" on both the concave surface and the convex surface.

[Table 2]

Table 2

| | | | First stage | | Second stage | | Water-absorbent antifogging layer thickness | | Evaluation |
|---|---|---|---|---|---|---|---|---|---|
| | Application surface | Supply amount of coating liquid (ml) | Rotation speed (rpm) | Time (sec) | Rotation speed (rpm) | Time (sec) | Central portion (μm) | Outer peripheral portion (μm) | Liquid pool |
| Example 6 | Concave surface | 3 | 360 | 4 | 1,050 | 2 | 12.7 | 12.7 | A |

[Example 7]

(Production of spectacle lens)

As a substrate, a thiourethane-based plastic lens "EYNOA" (manufactured by HOYA Corporation, refractive index: 1.67) was used.

(1) The hard coat composition adjusted in Example 6 was applied to the convex surface of the substrate by a spin coating method. After the application, heating was performed at a heating temperature of 90°C for 120 minutes to form a hard coat layer having a thickness of 3 um on the convex surface of the substrate.

(2) Next, the coating liquid obtained in the above Production Example was applied onto the concave surface of the substrate by a spin coating method. After the application, pre-firing was performed at 100°C for 20 minutes, and then main firing was performed at 120°C for 120 minutes to form a water-absorbent antifogging layer.

The conditions for the spin coating method, the thickness of the water-absorbent antifogging layer, and the evaluation results of the liquid pool at this time are shown in Table 3.

(3) Next, an antireflection layer (the uppermost layer was a silicon oxide layer) having a thickness of 500 nm was formed on the hard coat layer on the convex surface side of the substrate in the same manner as in Example 6 by a vacuum vapor deposition method.

(4) Next, a hydrophilic antifogging layer having a thickness of 20 nm was formed on the antireflection layer on the convex surface side of the substrate in the same manner as in Example 6.

As illustrated in 2a of Fig. 1, the spectacle lens obtained in Example 7 has a layer structure of [water-absorbent antifogging layer 32, substrate 11, HC 21, antireflection layer 22, hydrophilic antifogging layer 23] from the concave surface side.

The antifogging performance of the obtained spectacle lens was evaluated as "A" on both the concave surface and the convex surface.

[Table 3]

Table 3

| | | | First stage | | Second stage | | Water-absorbent antifogging layer thickness | | Evaluation |
|---|---|---|---|---|---|---|---|---|---|
| | Application surface | Supply amount of coating liquid (ml) | Rotation speed (rpm) | Time (sec) | Rotation speed (rpm) | Time (sec) | Central portion (μm) | Outer peripheral portion (μm) | Liquid pool |
| Example 7 | Concave surface | 3 | 360 | 4 | 1,050 | 2 | 12.7 | 12.7 | A |

[Examples 8 to 15]

Spectacle lenses were produced by the same operation as in Example 1 except that the coating liquid was applied onto the substrate under the conditions shown in Table 4.

[Table 4]

Table 4

| | | | First stage | | Second stage | | Water-absorbent antifogging layer thickness | | Evaluation | |
|---|---|---|---|---|---|---|---|---|---|---|
| | Application surface | Supply amount of coating liquid (ml) | Rotation speed (rpm) | Time (sec) | Rotation speed (rpm) | Time (sec) | Central portion (μm) | Outer peripheral portion (μm) | Antifogging properties | Liquid pool |
| Example 8 | Convex surface | 3 | 200 | 4 | 1,050 | 2 | 11.7 | 11.6 | A | A |
| Example 9 | Convex surface | 3 | 600 | 4 | 1,050 | 2 | 11.0 | 10.7 | A | A |
| Example 10 | Convex surface | 3 | 360 | 1 | 1,050 | 2 | 11.6 | 10.7 | A | A |
| Example 11 | Convex surface | 3 | 360 | 10 | 1,050 | 2 | 11.2 | 10.9 | A | A |
| Example 12 | Convex surface | 3 | 360 | 4 | 1,050 | 1 | 11.8 | 11.3 | A | A |
| Example 13 | Convex surface | 3 | 360 | 4 | 1,050 | 10 | 10.0 | 9.2 | A | A |
| Example 14 | Convex surface | 3 | 360 | 4 | 700 | 2 | 12.6 | 12.1 | A | A |
| Example 15 | Convex surface | 3 | 360 | 4 | 1,500 | 2 | 9.3 | 9.0 | A | A |

[Reference Example]

As a substrate, a thiourethane-based plastic lens "EYNOA" (manufactured by HOYA Corporation, refractive index: 1.67) was used.

(1) The coating liquid obtained in the above Production Example was applied to the substrate by a dipping method. After the application, pre-firing was performed at 100°C for 20 minutes, and then main firing was performed at 120°C for 120 minutes to form a water-absorbent antifogging layer having a thickness of 12.7 um on both surfaces of the substrate.
(2) Next, an antireflection layer (an uppermost layer was a silicon oxide layer) having a thickness of 500 nm was formed on the water-absorbent antifogging layer on the convex surface side of the substrate in the same manner as in Example 6 by a vacuum vapor deposition method.
(3) Next, a hydrophilic antifogging layer having a thickness of 20 nm was formed on the antireflection layer on the convex surface side of the substrate in the same manner as in Example 6.

Here, Fig. 3 is a schematic cross-sectional view of a spectacle lens for reference.
As illustrated in 1c of Fig. 3, the spectacle lens obtained in Reference Example has a layer structure of [water-absorbent antifogging layer 32, substrate 11, water-absorbent antifogging layer 24, antireflection layer 22, hydrophilic antifogging layer 23] from the concave surface side.
In the spectacle lens obtained in the Reference Example, an antifogging layer was formed on the outermost layers of the concave surface and the convex surface with a small number of steps. However, since the antireflection layer was formed on the relatively soft water-absorbent antifogging layer, the antireflection layer was wrinkled, and a desired function could not be imparted to the spectacle lens.
In the method for producing a spectacle lens of the present embodiment, the same or different antifogging layers can be formed on both surfaces of the substrate. As a result, a spectacle lens in which the water-absorbent antifogging layer is formed on one surface and the water-absorbent antifogging layer is not formed on the other surface can be produced. Accordingly, in the present embodiment, a spectacle lens having a water-absorbent antifogging layer only on one surface thereof can be produced without forming an antireflection layer on the water-absorbent antifogging layer as in Reference Example described above. Therefore, a desired layer structure can be easily realized, and a desired function can be imparted to the spectacle lens.
Finally, the embodiment of the present disclosure will be summarized.
In the method for producing a spectacle lens according to the embodiment of the present disclosure, a coating liquid containing a water-absorbent antifogging layer composition is applied to at least one surface of a substrate by a spin coating method to form a water-absorbent antifogging layer.
According to the embodiment described above, it is possible to provide a method for producing a spectacle lens capable of forming the same or different antifogging layers on both surfaces of a substrate with almost no liquid pool.
Each embodiment disclosed herein is an example in every respect and should not be restrictively understood. The scope of the present disclosure is defined not by the above description but by claims, and intends to include all modifications within meaning and a scope equal to claims.
In the present disclosure, as for the examples of components, contents, and physical properties, matters exemplified or described as a preferable range in the detailed description of the invention may be combined with each other arbitrarily.
In addition, by adjusting the composition described in Examples so as to be the composition described in the detailed description of the invention, the embodiment in the present disclosure can be performed in a similar manner to Examples in the entire claimed composition range.

Reference Signs List

1a, 2a, 3a, 1b, 2b, 1c Spectacle lens
11 Substrate
21, 31 Hard coat layer
22 Antireflection layer
23 Hydrophilic antifogging layer
24, 32 Water-absorbent antifogging layer

## Claims

1. A method for producing a spectacle lens, comprising applying a coating liquid containing a water-absorbent antifogging layer composition to at least one surface of a substrate by a spin coating method to form a water-absorbent antifogging layer.

2. The method for producing a spectacle lens according to claim 1, wherein the water-absorbent antifogging layer composition contains a constituent unit derived from acrylamide.

3. The method for producing a spectacle lens according to claim 1 or 2, wherein an antifogging layer is formed on the other surface of the substrate by a spin coating method.

4. The method for producing a spectacle lens according to claim 3, wherein a thickness of the water-absorbent antifogging layer on the one surface and a thickness of the antifogging layer on the other surface are the same or different.

5. The method for producing a spectacle lens according to claim 3 or 4, wherein the antifogging layer on the other surface is a water-absorbent antifogging layer or a hydrophilic antifogging layer.

6. The method for producing a spectacle lens according to any one of claims 1 to 5, wherein a coating liquid containing the water-absorbent antifogging layer composition is applied to the other surface of the substrate by a spin coating method to form a water-absorbent antifogging layer.

7. The method for producing a spectacle lens according to any one of claims 1 to 6, wherein the water-absorbent antifogging layer is directly formed on at least one surface of the substrate.

8. The method for producing a spectacle lens according to any one of claims 1 to 5, wherein the following steps 1 to 3 are sequentially performed:

   Step 1: applying a coating liquid containing the water-absorbent antifogging layer composition to one surface of the substrate by a spin coating method to form a water-absorbent antifogging layer;
   Step 2: forming an antireflection layer on the other surface of the substrate; and
   Step 3: forming a hydrophilic antifogging layer on the other surface having the antireflection layer obtained in the step 2.

9. The method for producing a spectacle lens according to claim 8, wherein a hard coat layer is formed on at least the other surface of the substrate before performing the step 1 or the step 2.

10. The method for producing a spectacle lens according to any one of claims 1 to 9, wherein one surface of the substrate is a concave surface, and the other surface of the substrate is a convex surface.

11. The method for producing a spectacle lens according to any one of claims 1 to 10, wherein the water-absorbent antifogging layer on at least the one surface of the substrate is an outermost layer.

12. The method for producing a spectacle lens according to any one of claims 1 to 11, wherein the water-absorbent antifogging layer on at least the one surface of the substrate is a single layer.

13. The method for producing a spectacle lens according to any one of claims 1 to 12, wherein the water-absorbent antifogging layer composition contains the following components (A) to (C):

   Component (A): a (meth)acrylic resin (A) having a constituent unit derived from a monomer (a-1) represented by the following general formula (1), a constituent unit derived from a monomer (a-2) represented by the following general formula (2), a constituent unit derived from a hydroxyalkyl (meth)acrylate (a-3), and a constituent unit derived from a monomer (a-4) represented by the following general formula (3);
   Component (B): a polyol compound (B); and
   Component (C): a polyfunctional isocyanate compound (C),

[Chemical Formula 1]

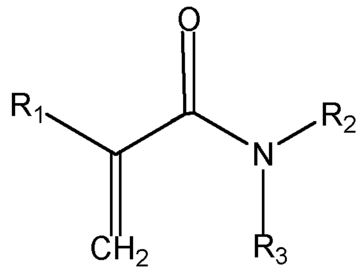

(1)

wherein $R_1$ is a hydrogen atom or a methyl group, $R_2$ and $R_3$ are each independently a hydrogen atom or a linear or branched alkyl group having 1 to 3 carbon atoms, and $R_2$ and $R_3$ may be the same or different,

[Chemical Formula 2]

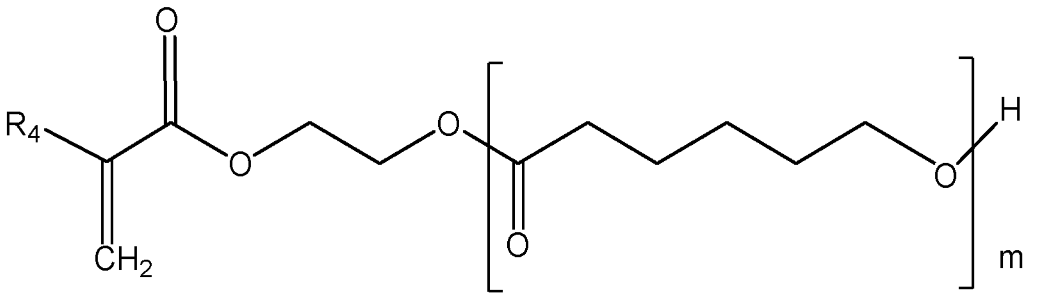

(2)

wherein $R_4$ is a hydrogen atom or a methyl group, and m is an integer of 1 to 5, and

[Chemical Formula 3]

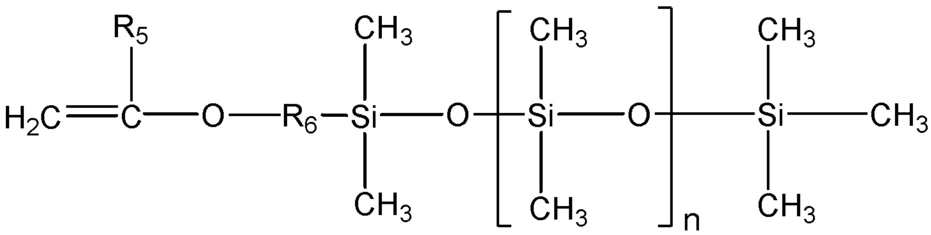

(3)

wherein $R_5$ is a hydrogen atom or a methyl group, $R_6$ is a divalent organic group, and n is 0 or an integer of 1 or more.

FIG. 1

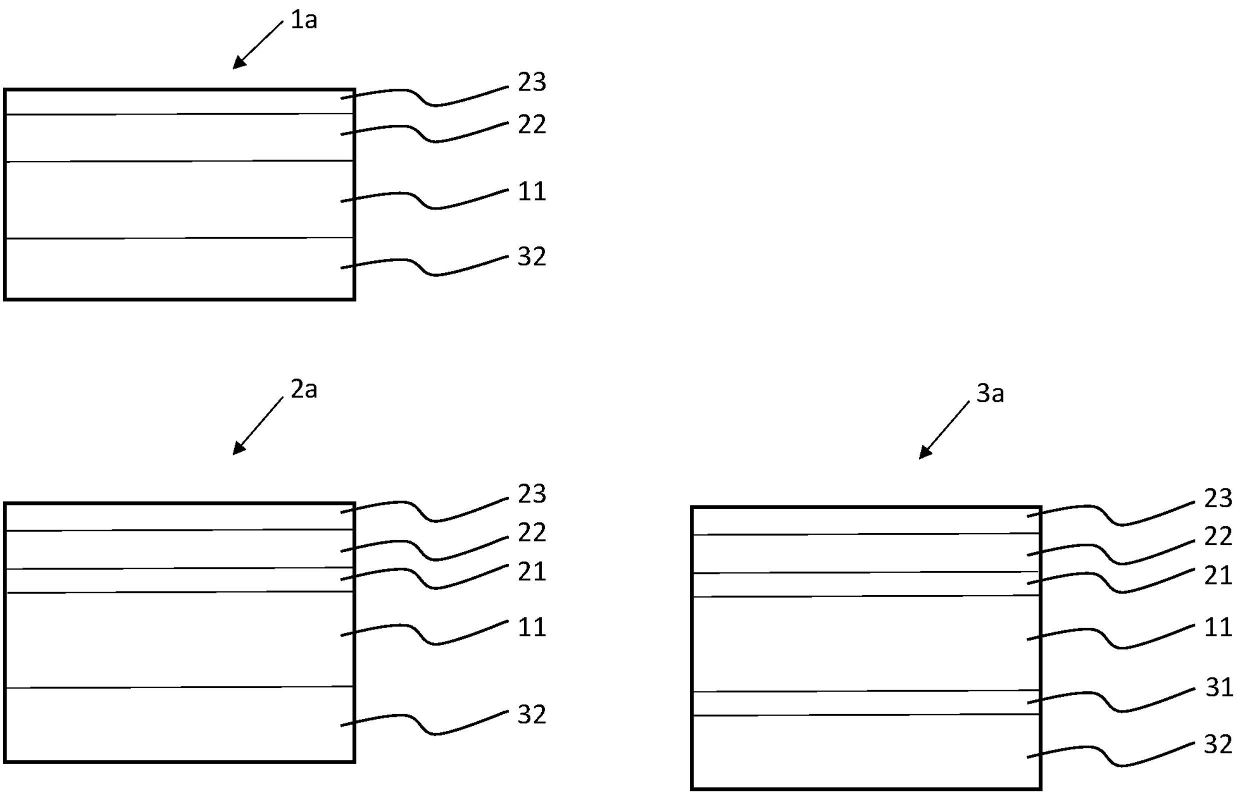

FIG. 2

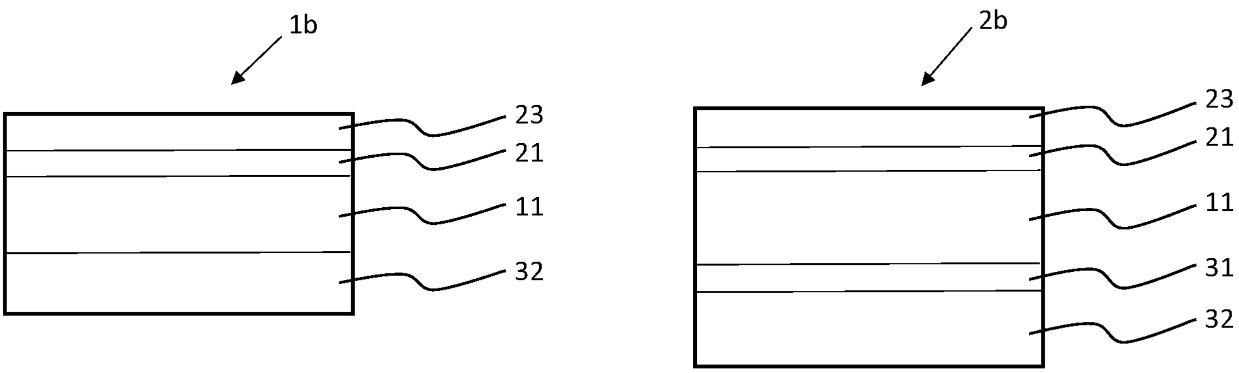


FIG. 3

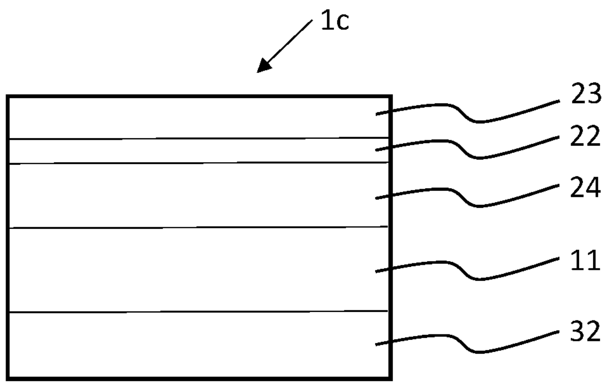

**INTERNATIONAL SEARCH REPORT**

International application No.
**PCT/JP2022/016561**

**A. CLASSIFICATION OF SUBJECT MATTER**

***G02C 7/02***(2006.01)i; ***C08G 18/40***(2006.01)i; ***G02B 1/10***(2015.01)i; ***G02B 1/14***(2015.01)i; ***G02C 7/00***(2006.01)i
FI: G02C7/02; C08G18/40 036; G02B1/10; G02B1/14; G02C7/00

According to International Patent Classification (IPC) or to both national classification and IPC

**B. FIELDS SEARCHED**

Minimum documentation searched (classification system followed by classification symbols)

G02C7/02; C08G18/40; G02B1/10; G02B1/14; G02C7/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2005-234066 A (ASAHI LITE OPTICAL CO LTD) 02 September 2005 (2005-09-02)<br>paragraphs [0013]-[0023], [0043]-[0046]<br>paragraphs [0013]-[0023], [0043]-[0046] | 1, 3-7, 11-12<br>2, 8-10, 13 |
| Y | JP 2019-94468 A (NATOKO KK) 20 June 2019 (2019-06-20)<br>paragraphs [0009], [0011], [0030], [0087] | 2, 13 |
| Y | JP 2004-323794 A (PENTAX CORP) 18 November 2004 (2004-11-18)<br>paragraphs [0015], [0023] | 8-9 |
| Y | Microfilm of the specification and drawings annexed to the request of Japanese Utility Model Application No. 056835/1975 (Laid-open No. 137342/1976) (NIHON HYDRON KK) 05 November 1976 (1976-11-05), p. 7, line 6 to p. 8, line 17, fig. 2 | 10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 June 2022** | **28 June 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/016561**

| Patent document cited in search report | Publication date (day/month/year) | Patent family member(s) | Publication date (day/month/year) |
|---|---|---|---|
| JP 2005-234066 A | 02 September 2005 | (Family: none) | |
| JP 2019-94468 A | 20 June 2019 | JP 6340539 B1 | |
| JP 2004-323794 A | 18 November 2004 | (Family: none) | |
| JP 51-137342 U1 | 05 November 1976 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000075104 A
- WO 2013005710 A